# EUROPÄISCHE PATENTSCHRIFT

(11) **EP 3 165 596 B1**
(45) Veröffentlichungstag und Bekanntmachung des Hinweises auf die Patenterteilung: **24.07.2019**
(21) Anmeldenummer: 15003168.0
(22) Anmeldetag: 05.11.2015
(51) Int. Cl.: C12H 1/07, C12C 7/16, C12C 11/11, C12C 13/00

(54) **VERFAHREN ZUM REINIGEN VON BIER UND BIERREINIGER**
METHOD FOR PURIFYING BEER AND BEER PURIFIER
PROCEDE DE NETTOYAGE DE BIERE ET NETTOYEUR DE BIERE

(43) Veröffentlichungstag der Anmeldung: 10.05.2017
(73) Patentinhaber: Simon H. Steiner, Hopfen, GmbH, 84048 Mainburg (DE)
(72) Erfinder: Mitter, Wilhelm, 84044 Mainburg (DE)
(74) Vertreter: Müller-Boré & Partner Patentanwälte PartG mbB

(56) Entgegenhaltungen:
- EP-A1- 1 190 756
- DE-A1- 1 442 316
- DE-A1- 2 510 254
- DE-A1- 2 747 165
- DE-U1- 29 810 474
- GB-A- 801 658
- US-A- 2 146 692
- US-A- 2 919 806
- US-A- 3 259 244
- US-B1- 8 302 780

## Beschreibung

Die vorliegende Erfindung bezieht sich auf ein Verfahren zum Reinigen von Bier sowie auf eine entsprechende Vorrichtung.

In den letzten Jahren wurde ein altes Hopfungsverfahren wieder neu ins Leben gerufen, nämlich das "Hopfenstopfen" oder die Kalthopfung, im englischen Sprachgebrauch auch als "Dry Hopping" bezeichnet. Dabei wird neben der Hopfung im Sudhaus, Hopfen in Form von Doldenhopfen oder Pellets noch bei der Gärung und/oder Lagerung zur Aromatisierung eingesetzt.

Bei diesem Verfahren müssen schließlich die aus dem Hopfen stammenden Feststoffe sowie andere Partikel wieder aus dem Bier entfernt werden. Dies geschieht herkömmlich beispielsweise durch einen Bierfilter, wie in WO 02/074411 A1 beschrieben ist. Dieser Bierfilter hat eine Vielzahl von Filterkerzen, die periodisch von den zurückgehaltenen Feststoffen gereinigt werden müssen. Je mehr sich ein Bierfilter zusetzt, um so geringer wird der Durchsatz bzw. um so größer ist die Energie, die zum Durchspülen des Filters erforderlich ist.

Es wurde deshalb bereits angedacht, Bier durch ein anderes Verfahren zu reinigen. Ein alternatives Verfahren wäre die Verwendung einer Zentrifuge, in der sich Feststoffe durch die Fliehkraft absetzen. Eine Zentrifuge erfordert jedoch einen hohen Energieaufwand, so dass diese Idee nur teilweise weiterverfolgt wurde.

Herkömmlich werden auch vorgelöste Hopfenpellets verwendet, die sich am Boden eines Behälters absetzen. Auf diese Weise gibt es jedoch hohe Bierverluste in dem abgeschiedenen Abfall.

DE 1 442 316 A1 offenbart eine Vorrichtung zum Trennen von Hopfenblättern und Würze mit einem Hopfenseiher, der am unteren Ende eine Austragsöffnung aufweist, und einem Behälter zum Auffangen der Würze.

US 2 146 692 A offenbart eine Vorrichtung zum Sieben von Flüssigkeiten zum Einsatz in Brauereien, um Hopfen zu entfernen.

US 2 919 806 A beschreibt ein Hopfensieb mit einem Behälter, der einen perforierten Siebbereich aufweist.

DE 27 47 165 A1 beschreibt eine Vorrichtung und ein Verfahren zum Absieben scherempfindlicher Polymerdispersionen.

DE 298 10 474 U1 beschreibt eine Vorrichtung zum Eindicken von Schlämmen.

Die Aufgabe der Erfindung besteht somit in der Schaffung eines verbesserten Reinigungsverfahrens für Bier zum Entfernen von Feststoffen, mit dem Bier auf effiziente Weise gereinigt werden kann und mit dem ein Austrag an gereinigtem Bier maximiert werden kann. Des weiteren soll ein entsprechender Bierreiniger zur Verfügung gestellt werden.

Diese Aufgabe wird durch die Merkmale der unabhängigen Ansprüche gelöst. Vorteilhafte Weiterbildungen sind in den abhängigen Ansprüchen definiert.

Nach einem Aspekt wird ein Verfahren zum Reinigen bzw. Filtern von Bier mit folgenden Schritten zur Verfügung gestellt: Aufbringen von Bier auf einen schräggestellten Filter bzw. Sieb, so dass das Bier entlang dem schräggestellten Filter herabläuft. Vorzugsweise ist der Filter plattenartig ausgebildet bzw. als im wesentlichen ebene Platte geformt. In dem zu reinigenden Bier enthaltene Flüssigkeit gelangt durch Öffnungen des Filters in einen Auffangraum unterhalb des Filters und in dem Bier enthaltene Feststoffe gleiten entlang des schräggestellten Filters nach unten. Das gefilterte Bier wird aus dem Auffangraum abgeleitet.

Durch das Schrägstellen des Filters, insbesondere eines plattenartigen geradlinigen Filters, können die in dem zu reinigenden Bier enthaltenen Feststoffe entlang der Fläche des Filters herabgleiten und können somit die Filteröffnungen nicht zusetzen bzw. verschließen. In anderen Worten bleibt der Durchsatz des Filters während seines Betriebs im wesentlichen gleich groß, weil die Öffnungen des Filters nicht durch Feststoffe verstopft werden.

Der Filter bzw. das Sieb wirken somit nach dem Prinzip einer schiefen Ebene, bei der die Feststoffe aufgrund der Hangabtriebskraft nach unten gleiten, um von der Flüssigkeit abgeschieden zu werden. Im Gegensatz hierzu tritt die Flüssigkeit durch die Öffnungen bzw. Schlitze bzw. Durchtritte des Filters hindurch und gelangt in den unterhalb des Filters vorgesehenen Auffangraum, um dort das gereinigte bzw. gefilterte Bier zu ernten.

Der Begriff "schiefe Ebene" darf jedoch nicht so verstanden werden, dass der Filter bzw. das Sieb eben ausgebildet sein muss. Dieser kann auch andere Gestalten, wie beispielsweise eine Bogenform, eine Wellenform, Stufenform oder dergleichen aufweisen, so lange wie eine ausreichende Hangabtriebskraft zum Abscheiden der Feststoffe erzeugt werden kann.

Vorzugsweise umfasst das Verfahren des weiteren die Schritte Sammeln der Feststoffe in einem Sammelraum unterhalb des Filters und periodisches oder kontinuierliches Entfernen der Feststoffe aus dem Sammelraum.

Weiter bevorzugt weist der Schritt des Aufbringens des Biers auf den Filter den Schritt des Anordnens eines Überlaufgefäßes im oberen Bereich des Filters auf, um aus dem Überlaufgefäß austretendes Bier auf den Filter fließen zu lassen. Indem das Bier aus dem Überlaufgefäß auf den Filter läuft, wird ein gleichmäßiger, im wesentlichen laminarer Fluß des Biers entlang des schräggestellten Filters erzielt, so daß eine maximale Flüssigkeitsmenge durch die Öffnungen des Filters hindurchtreten kann und somit eine optimale Abscheidung der Feststoffe erfolgen kann. Eine Ausbeute von gefiltertem Bier wird somit maximal.

Indem das Bier während des Filtrierens mit Kohlendioxid unter Druck gesetzt wird, wird einerseits Kohlensäure in dem Bier erzeugt und andererseits wird eine Druckdifferenz zwischen einer stromaufwärtigen Seite des Filters und einer stromabwärtigen Seite des Filters bzw. dem Auffangraum erzeugt, so daß ein Verstopfen des Filters verhindert werden kann. In anderen Worten herrscht auf einer Eingangsseite des Filters ein erhöhter Druck gegenüber einer Ausgangsseite des Filters, so daß das Fluid durch die Öffnungen des Filters hindurchgedrückt wird.

Vorzugsweise weist das Verfahren des Weiteren den Schritt des periodischen Reinigens des Filters durch Besprühen desselben mit einem Reinigungsfluid auf.

Weiter bevorzugt wird der Filter um etwa 10° bis etwa 80°, vorzugsweise um etwa 30° bis etwa 60° gegenüber der Horizontalen schräggestellt.

Gemäß einem weiteren Aspekt wird ein Bierreiniger mit einem schräggestellten Filter und einem unter dem Filter angeordneten Auffangraum, einem Überlaufgefäß mit einem Einlass zum Einleiten von Bier und einem Überlauf zum Aufbringen des überlaufenden Biers auf den Filter, und einem Auslass zur Verfügung gestellt. Der Auslass ist zum Abführen des gereinigten Biers mit dem Auffangraum verbunden.

Vorzugsweise weist der Bierreiniger des Weiteren einen Sammelraum unterhalb des Filters zum Sammeln der aus dem Bier abgeschiedenen Feststoffe auf, wobei der Sammelraum vorzugsweise mit einem Schieber verbunden ist, um zum Entfernen der Feststoffe den Sammelraum selektiv zu öffnen und zu schließen.

Weiter bevorzugt ist der Filter des Bierreinigers um etwa 10° bis etwa 80°, vorzugsweise um etwa 30° bis etwa 60° gegenüber der Horizontalen schräggestellt, so dass die Feststoffe an der Schräge herabgleiten und die Öffnungen des Filters nicht verstopfen können.

Erfindungsgemäß umfasst der Bierreiniger einen Druckkessel, in dem der Filter und der Auffangraum angeordnet sind und der mit Kohlendioxid während dem Filtrieren unter Druck gesetzt werden kann.

Vorzugsweise weist der Druckkessel des Weiteren zumindest eine Sprühdüse auf, die an einen mit Reinigungsmittel versehenen Behälter anschließbar ist, um das Innere des Druckkessels und/oder den Filter zu reinigen.

Weiter bevorzugt ist ein Bypass mit einem Bypassventil zwischen dem Einlass des Überlaufgefässes und dem Auslass des Auffangraums angeordnet und/oder eine Rücklaufleitung zwischen einem mit dem Sammelraum verbundenen Ablauf und dem Auslass des Auffangraums angeordnet, die ein Rücklaufventil aufweist, um die Rücklaufleitung selektiv zu öffnen oder zu schließen.

Durch den Bypass kann bereits gefiltertes Bier noch einmal dem Einlaß zugeführt werden, um eine nochmalige Filterung durchzuführen. Durch die Rücklaufleitung kann in der Anlaufphase des Bierreinigers in den abgeschiedenen Feststoffen enthaltene Flüssigkeit dem Kreislauf zum Reinigen erneut zugeführt werden, um eine Austragsmenge an gereinigtem Bier zu erhöhen. In anderen Worten kann in den abgeschiedenen Feststoffen enthaltene Flüssigkeit über die Rücklaufleitung dem Einlaß des Bierreinigers zugeführt werden, um die Flüssigkeit erneut zu filtern und nicht mit den Feststoffen abzuscheiden.

Vorzugsweise ist in einem Zulauf zu dem Einlass des Überlaufgefässes und/oder in einer Ableitung zum Abführen von gereinigtem Bier aus dem Auslass des Auffangraums jeweils eine Pumpe angeordnet, vorzugsweise eine elektrisch angetriebene Pumpe.

Der Filter weist vorzugsweise schlitzartige Öffnungen mit einer Schlitzbreite von etwa 100 bis etwa 500 µm, vorzugsweise mit einer Schlitzbreite von etwa 200 bis etwa 300 µm auf.

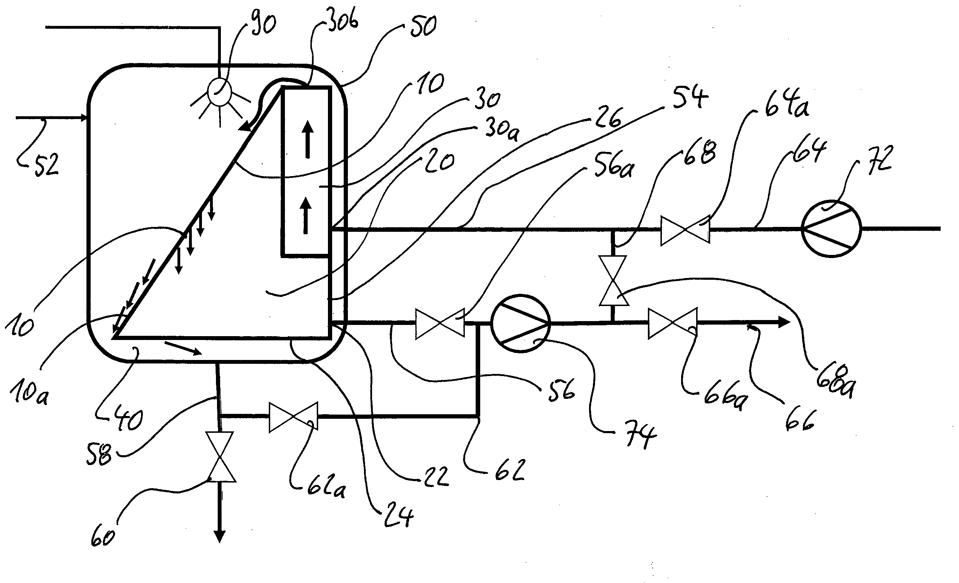

Die Erfindung wird nun anhand eines Ausführungsbeispiels unter Bezugnahme auf die einzige Figur näher erläutert.

Die Figur zeigt einen in einem Druckkessel angeordneten Bierreiniger mit einem Auffangraum sowie einem Sammelraum zum Sammeln der Feststoffe.

Wie in der Figur gezeigt ist, ist ein schräggestellter, plattenartiger Filter 10 oberhalb eines Auffangraums 20 angeordnet. Der Filter 10 hat eine Vielzahl von (nicht gezeigten) Öffnungen, durch die die abgeschiedene Flüssigkeit hindurchtreten kann. Diese Öffnungen sind beispielsweise als Schlitze mit einer Schlitzbreite von etwa 100 bis etwa 500 µm, vorzugsweise mit einer Schlitzbreite von etwa 200 bis etwa 300 µm ausgebildet.

Der Auffangraum 20 ist durch den Filter 10 und einen Behälterboden 24 sowie eine umlaufende Behälterwand 26 gebildet bzw. begrenzt. An einer Oberseite des Auffangraums 20 ist des weiteren ein Überlaufgefäß 30 angeordnet, das an seiner Oberseite einen Überlauf 30b aufweist sowie an seiner Unterseite einen Einlaß 30a zum Einleiten von zu reinigendem Bier.

Die in den Einlaß 30a eingebrachte Flüssigkeit steigt in dem Überlaufgefäß 30 hoch, bis es den Überlauf 30b erreicht, und tritt dann aus dem Überlauf 30b aus. Das aus dem Überlauf 30b austretende Bier läuft an dem schräggestellten Filter 10 herab, wobei die Flüssigkeit über die in dem Filter 10 angeordneten Öffnungen durch den Filter 10 hindurchtritt und in den Auffangraum 20 hineinläuft.

Die in dem Auffangraum 20 gesammelte Flüssigkeit kann über den Auslaß 22 aus dem Auffangraum 20 ausgelassen werden. In dem zu reinigenden Bier enthaltene Feststoffe gleiten entlang des schräggestellten Filters 10 herab, ohne durch die Öffnungen des Filters 10 hindurchzutreten. Dementsprechend fallen die Feststoffe an der Unterseite 10a des Filters 10 herab und werden in einem Sammelraum 40 unterhalb des Filters 10 gesammelt. Um in dem Sammelraum 40 gesammelte Feststoffe zu entfernen, ist der Sammelraum 40 an seinem Boden mit einem Ablauf 58 versehen, der durch einen Schieber 60 geöffnet und geschlossen werden kann. Beim Öffnen des Schiebers 60 können die abgeschiedenen Feststoffe aus dem Auffangraum 40 entfernt werden.

Für die Zufuhr von zu reinigendem Bier ist eine Zuleitung 54 mit einem Zulauf 64 verbunden, der durch ein Zulaufventil 64a geöffnet und geschlossen werden kann. Zum Fördern des zu reinigenden Biers ist vorzugsweise eine Zulaufpumpe 72 in dem Zulauf 64 angeordnet. Diese Zulaufpumpe 72 ist vorzugsweise eine elektrisch angetriebene Förderpumpe.

Des weiteren ist der Auslaß 22 des Auffangraums 20 mit einer Ableitung 56 versehen, die durch ein Ableitungsventil 56a geöffnet und geschlossen werden kann. Weiter bevorzugt ist die Ableitung 56 mit einer Ableitungspumpe 74 versehen, die ebenso wie die Zulaufpumpe 72 vorzugsweise eine elektrische Förderpumpe ist. Ein Auslass der Ableitungspumpe 74 ist mit einem Ausgang 66 für das gereinigte Bier verbunden. Darüber hinaus ist der Ausgang 66 mit einem Auslaßventil 66a versehen, das geöffnet und geschlossen werden kann.

Des weiteren ist der Ablauf 58 vorzugsweise mit einer Rücklaufleitung 62 versehen, die an einem stromabwärtigen Ende mit der Ableitung 56 verbunden ist. Durch diese Rücklaufleitung 62, die mit einem Rücklaufventil 62a zum Öffnen und Schließen der Rücklaufleitung 62 versehen ist, kann in den abgeschiedenen Feststoffen enthaltene Flüssigkeit zurückgeleitet werden.

Schließlich ist die Ableitung 56 über einen Bypass 68 mit der Zuleitung 54 verbindbar, indem ein in dem Bypass 68 angeordnetes Bypassventil 68a geöffnet werden kann. Auf diese Weise kann Fluid bzw. Flüssigkeit aus der Ableitung 56 über den Bypass 68 sowie das geöffnete Bypassventil 68a in die Zuleitung 54 zurückgeleitet werden, um das Fluid bzw. die Flüssigkeit erneut zu reinigen bzw. zu filtern.

Nachfolgend wird der Betrieb des Bierreinigers sowie das Verfahren zum Reinigen des Biers beschrieben. Es soll nun zunächst ein Normalbetrieb des Bierreinigers beschrieben werden.

Im Normalbetrieb ist die Zulaufpumpe 72 eingeschaltet, um zu reinigendes Bier über den Zulauf 64 und das geöffnete Zulaufventil 64a zu dem Einlaß 30a des Überlaufgefäßes 30 zu fördern. Das zu reinigende Bier steigt entsprechend in dem Überlaufgefäß 30 hoch, bis es den Überlauf 30b erreicht. Bei einer weiteren Förderung des zu reinigenden Biers läuft dieses aus dem Überlauf 30b des Überlaufgefäßes 30 heraus und fließt entlang des schräggestellten Filters 10 nach unten.

Dabei kann in dem zu reinigenden Bier enthaltene Flüssigkeit durch die Öffnungen des Filters 10 hindurchtreten, um in den Auffangraum 20 hineinzutropfen bzw. in den Auffangraum 20 einzutreten. In dem zu reinigenden Bier enthaltene Feststoffe hingegen können nicht durch die Öffnungen des Filters 10 hindurchtreten, sondern gleiten entlang des schräggestellten Filters 10 nach unten, um in den Sammelraum 40 zu gelangen. Im Normalbetrieb ist der Schieber 60 geschlossen, so daß sich die abgeschiedenen Feststoffe in dem Sammelraum 40 sammeln. Durch periodisches Öffnen des Schiebers 60 können die Feststoffe aus dem Sammelraum 40 entfernt werden.

Die in dem Auffangraum 20 gesammelte Flüssigkeit kann über den Auslaß 22 bei geöffnetem Ableitungsventil 56a über die Ableitung 56 zu der Ableitungspumpe 74 fließen, um über das geöffnete Auslaßventil 66a zum Ausgang 66 zu gelangen. Am Ausgang 66 wird somit das gereingte Bier ausgelassen. In diesem Normalbetrieb sind sowohl das Bypassventil 68a als auch das Rücklaufventil 62a geschlossen.

Zum Abscheiden der Feststoffe aus dem Sammelraum 40 kann der Schieber 60 in periodischen Abständen geöffnet werden, um die abgeschiedenen Feststoffe über den Ablauf 58 aus dem Sammelraum 40 zu entfernen.

In der Anlaufphase des Bierreinigers muß der Durchsatz des zu reinigenden Biers zunächst eingestellt werden, so daß eine maximale Menge an Flüssigkeit durch die Öffnungen des Filters 10 hindurchtritt und nicht in den Sammelraum 40 gelangt. In anderen Worten muß der Durchsatz so eingestellt werden, daß eine maximale Menge an Flüssigkeit durch den Filter 10 hindurchtreten kann, bevor die Flüssigkeit ein unteres Ende bzw. die Unterseite 10a des Filters 10 erreicht und in den Sammelraum 40 gelangt.

Um bei einem zu hohen Durchsatz, bei dem Flüssigkeit in den Sammelraum 40 gelangt, diese Flüssigkeit in den Kreislauf zurückzubringen, ist die Rücklaufleitung 62 sowie der Bypass 68 angeordnet. In diesem Fall wird das Rücklaufventil 62a und das Bypassventil 68a geöffnet und das Auslaßventil 66a wird geschlossen, um Flüssigkeit aus dem Sammelraum 40 über die Rücklaufleitung 62 und den Bypass 68 zu der Zuleitung 54 zurückzuführen. Auf diese Weise kann die Flüssigkeit aus dem Sammelraum 40 dem Kreislauf erneut zugeführt werden, um diese Flüssigkeit in den Einlaß 30a des Überlaufgefäßes 30 zu bringen und erneut zu reinigen bzw. zu filtern. Im Normalbetrieb werden dann, wie bereits erwähnt wurde, das Bypassventil 68a und das Rücklaufventil 62a geschlossen.

Des weiteren wird eine Oberseite bzw. stromaufwärtige Seite des Filters 10 mit Kohlendioxid unter Druck gesetzt, indem der Filter 10 mit dem Überlaufgefäß 30 und dem Auffangraum 20 innerhalb eines Druckkessels 50 angeordnet werden. Dieser Druckkessel 50 verfügt über einen Druckanschluß 52, über den Kohlendioxid (CO₂) unter Druck zu dem Druckkessel 50 zugeführt wird. Dabei wird der CO₂ Druck auf etwa 0,6 bis 0,8 bar, höchstens jedoch 0,99 bar eingestellt.

Um den Filter 10 sowie den in dem Druckkessel 50 angeordneten Sammelraum 40 in periodischen Abständen zu reinigen, ist in dem Druckkessel 50 darüber hinaus zumindest eine Sprühdüse 90 angeordnet, über die ein Reinigungsfluid in den Druckkessel 50 hinein eingebracht werden kann. Durch Besprühen des Filters 10 sowie des Inneren des Druckkessels 50 und insbesondere des Sammelraums 40 mit einem Reinigungsfluid und/oder Druckluft kann der Filter 10 sowie das Innere des Druckkessels 50 gereinigt werden.

Herkömmlich wurden auch Hopfenpellets verwendet, die vorgelöst wurden und sich am Boden eines Behälters abgesetzt haben. Auf diese Weise gab es jedoch hohe Bierverluste in dem abgeschiedenen Abfall. Durch den erfindungsgemäßen Bierreiniger jedoch kann der Austrag bzw. die Ausbeute an gereinigtem Bier beträchtlich erhöht werden. Darüber hinaus kann insbesondere kaltgehopftes Bier hervorragend gereinigt werden. In der Anlaufphase werden der Schieber 60, das Ableitungsventil 56a, das Auslaßventil 66a und das Zulaufventil 64a vorzugsweise geschlossen, während das Rücklaufventil 62a und das Bypassventil 68a geöffnet werden, um die in dem Sammelraum 40 gesammelte Flüssigkeit über die Rücklaufleitung 62 und den Bypass 68 zu der Zuleitung 54 zurückzuführen.

Im Gegensatz hierzu werden beim Normalbetrieb das Rücklaufventil 62a und das Bypassventil 68a geschlossen, während das Zulaufventil 64a, das Ableitungsventil 56a und das Auslaßventil 66a geöffnet werden, um von der Zulaufpumpe 72 gefördertes zu reinigendes Bier über den Filter 10 und den Auffangraum 20 mittels der Ableitungspumpe 74 zu dem Ausgang 66 für gereinigtes Bier zu fördern. Der Schieber 60 wird dabei in periodischen Abständen oder kontinuierlich geöffnet, um abgeschiedene Feststoffe aus dem Sammelraum 40 zu entfernen.

Obwohl in dem gezeigten Ausführungsbeispiel der Filter 10 eine im wesentlichen ebene, schräggestellte Platte aufweist, kann der Filter 10 auch eine bogenförmige oder wellenartige Gestalt aufweisen. Es kommt lediglich darauf an, daß der Filter eine Neigung gegenüber der Horizontalen aufweist, so daß in dem zu reinigenden Bier enthaltene Feststoffe entlang der Oberfläche des Filters 10 nach unten gleiten können, ohne die Öffnungen des Filters 10 zu verstopfen. Die Neigung des Filters beträgt dabei etwa 10 bis etwa 80 Grad gegenüber der Horizontalen, vorzugsweise etwa 30 bis etwa 60 Grad gegenüber der Horizontalen.

Das beschriebene Verfahren wird normalerweise in einem Temperaturbereich von etwa 0°C bis etwa 25°C angewandt. Es kann jedoch auch in einem Heißbereich von etwa 80°C bis etwa 110°C, vorzugsweise in einem Bereich von etwa 90°C bis etwa 100°C angewandt werden.

Obwohl in dem gezeigten Ausführungsbeispiel die Zulaufpumpe 72 und die Ableitungspumpe 74 angeordnet sind, kann der Bierreiniger auch ohne elektrisch angetriebene Pumpen betrieben werden, wenn beispielsweise eine Höhendifferenz angewandt wird, indem der Zulauf 64 höher als der Ausgang 66 angeordnet wird.

Die Öffnungen des Filters 10 können schlitzartig, langlochförmig, kreisförmig oder in jeder anderen Gestalt gebildet sein.

### Bezugszeichenliste

- 10: Filter
- 10a: Unterseite des Filters
- 20: Auffangraum
- 22: Auslass
- 24: Behälterboden
- 26: Behälterwand
- 30: Überlaufgefäß
- 30a: Einlass
- 30b: Überlauf
- 40: Sammelraum
- 50: Druckkessel
- 52: Druckanschluss
- 54: Zuleitung
- 56: Ableitung
- 56a: Ableitungsventil
- 58: Ablauf
- 60: Schieber
- 62: Rücklaufleitung
- 62a: Rücklaufventil
- 64: Zulauf
- 64a: Zulaufventil
- 66: Ausgang
- 66a: Auslassventil
- 68: Bypass
- 68a: Bypassventil
- 72: Zulaufpumpe
- 74: Ableitungspumpe
- 90: Sprühdüse

## Patentansprüche

1. Verfahren zum Reinigen bzw. Filtern von Bier mit den Schritten:
Aufbringen von Bier auf einen schräggestellten Filter (10), so dass das Bier entlang dem schräggestellten Filter (10) herabläuft und darin enthaltene Flüssigkeit durch Öffnungen des Filters (10) in einen Auffangraum (20) unterhalb des Filters (10) gelangt und in dem Bier enthaltene Feststoffe entlang des schräggestellten Filters (10) nach unten gleiten, und
Ableiten des gefilterten Biers aus dem Auffangraum (20),
**dadurch gekennzeichnet, dass**
das Bier während dem Filtrieren mit Kohlendioxid unter Druck gesetzt wird, so dass eine Druckdifferenz zwischen einer stromaufwärtigen Seite und einer stromabwärtigen Seite des Filters (10) erzeugt wird.

2. Verfahren nach Anspruch 1, des weiteren umfassend die Schritte:
Sammeln der Feststoffe in einem Sammelraum (40) unterhalb des Filters (10), und
periodisches oder kontinuierliches Entfernen der Feststoffe aus dem Sammelraum (40).

3. Verfahren nach einem der vorherigen Ansprüche, wobei der Schritt des Aufbringens des Biers auf den Filter (10) den Schritt des Anordnens eines Überlaufgefäßes (30) im oberen Bereich des Filters (10) aufweist, um aus dem Überlaufgefäß (30) austretendes Bier auf den Filter (10) fließen zu lassen.

4. Verfahren nach einem der vorherigen Ansprüche, des Weiteren mit dem Schritt des periodischen Reinigens des Filters (10) durch Besprühen desselben mit einem Reinigungsfluid.

5. Verfahren nach einem der vorherigen Ansprüche, wobei der Filter (10) um 10° bis 80°, vorzugsweise um 30° bis 60° gegenüber der Horizontalen schräggestellt ist.

6. Bierreiniger mit einem schräggestellten Filter (10) und einem unter dem Filter (10) angeordneten Auffangraum (20),
einem Überlaufgefäß (30) mit einem Einlass (30a) zum Einleiten von Bier und einem Überlauf (30b) zum Aufbringen des überlaufenden Biers auf den Filter (10), und
einem Auslass (22), der zum Abführen des gereinigten Biers mit dem Auffangraum (20) verbunden ist,
**dadurch gekennzeichnet, dass**
der Filter (10) und der Auffangraum (20) in einem Druckkessel (50) angeordnet sind, der mit Kohlendioxid unter Druck gesetzt wird, so dass eine Druckdifferenz zwischen einer stromaufwärtigen Seite und einer stromabwärtigen Seite des Filters (10) herrscht.

7. Bierreiniger nach Anspruch 6, des Weiteren aufweisend einen Sammelraum (40) unterhalb des Filters (10) zum Sammeln der aus dem Bier abgeschiedenen Feststoffe, wobei der Sammelraum (40) vorzugsweise mit einem Schieber (60) verbunden ist, um zum Entfernen der Feststoffe den Sammelraum (40) zu öffnen und zu schließen.

8. Bierreiniger nach Anspruch 6 oder 7, wobei der Filter (10) um 10° bis 80°, vorzugsweise um 30° bis 60° gegenüber der Horizontalen schräggestellt ist.

9. Bierreiniger nach einem der vorherigen Ansprüche 6 bis 8, wobei der Druckkessel (50) des Weiteren zumindest eine Sprühdüse (90) aufweist, die an einen mit Reinigungsmittel versehenen Behälter anschließbar ist, um das Innere des Druckkessels (50) und/oder den Filter (10) zu reinigen.

10. Bierreiniger nach einem der vorherigen Ansprüche 6 bis 9, wobei ein Bypass (68) mit einem Bypassventil (68a) zwischen dem Einlass (30a) des Überlaufgefäßes (30) und dem Auslass (22) des Auffangraums (20) angeordnet ist und/oder eine Rücklaufleitung (62) zwischen einem mit dem Sammelraum (40) verbundenen Ablauf (58) und dem Auslass (22) des Auffangraums (20) angeordnet ist, die ein Rücklaufventil (62a) aufweist, um die Rücklaufleitung (62) selektiv zu öffnen oder zu schließen.

11. Bierreiniger nach einem der vorherigen Ansprüche 6 bis 10, wobei in einem Zulauf (64) zu dem Einlass (30a) des Überlaufgefäßes (30) und/oder in einer Ableitung (56) zum Abführen von gereinigtem Bier aus dem Auslass (22) des Auffangraums (20) jeweils eine Pumpe (72, 74), vorzugsweise eine elektrisch angetriebene Pumpe angeordnet ist.

12. Bierreiniger nach einem der vorherigen Ansprüche 6 bis 11, wobei der Filter (10) schlitzartige Öffnungen mit einer Schlitzbreite von 100 bis 500 µm, vorzugsweise mit einer Schlitzbreite von 200 bis 300 µm aufweist.

## Claims

1. Method of cleaning or filtering beer, having the following steps:
applying beer onto an obliquely positioned filter (10), so that the beer runs down along the obliquely positioned filter (10) and liquid contained therein passes through openings of the filter (10) into a collecting space (20) beneath the filter (10) and solids contained in the beer slide downwards along the obliquely positioned filter (10), and
routing the filtered beer out of the collecting space (20),
**characterized in that**
the beer is subjected to pressure by way of carbon dioxide during filtering, so that a difference in pressure generated between an upstream side and a downstream side of the filter (10).

2. Method according to Claim 1, also comprising the following steps:
accumulating the solids in an accumulating space (40) beneath the filter (10), and
periodically or continuously removing the solids from the accumulating space (40).

3. Method according to either of the preceding claims, wherein the step of applying the beer to the filter (10) includes the step of arranging an overflow vessel (30) in the upper region of the filter (10), in order to allow the beer which exits from the overflow vessel (30) to flow onto the filter (10).

4. Method according to one of the preceding claims, also having the step of periodically cleaning the filter (10) by spraying the same with a cleaning fluid.

5. Method according to one of the preceding claims, wherein the filter (10) is positioned obliquely through 10° to 80°, preferably through 30° to 60°, in relation to the horizontal.

6. Beer cleaning apparatus having an obliquely positioned filter (10) and a collecting space (20), which is arranged beneath the filter (10),
an overflow vessel (30) with an inlet (30a) for the introduction of beer and with an overflow (30b) for applying the overflowing beer to the filter (10), and
an outlet (22), which is connected to the collecting space (20) for the purpose of channelling away the cleaned beer,
**characterized in that**
the filter (10) and the collecting space (20) are arranged in a pressure tank (50) that is subjected to pressure by way of carbon monoxide, so that there is a difference in pressure between an upstream side and a downstream side of the filter (10).

7. Beer cleaning apparatus according to Claim 6, also having an accumulating space (40) beneath the filter (10) for accumulating the solids separated off from the beer, wherein the accumulating space (40) is preferably connected to a slide (60) in order to open and close the accumulating space (40) for the purpose of removing the solids.

8. Beer cleaning apparatus according to Claim 6 or 7, wherein the filter (10) is positioned obliquely through 10° to 80°, preferably through approimately 30° to 60°, in relation to the horizontal.

9. Beer cleaning apparatus according to Claim 6 to 8, wherein the pressure tank (50) also has at least one spray nozzle (90), which can be connected to a container provided with cleaning agent in order to clean the interior of the pressure tank (50) and/or the filter (10).

10. Beer cleaning apparatus according to one of preceding Claims 6 to 9, wherein a bypass (68) with a bypass valve (68a) is arranged between the inlet (30a) of the overflow vessel (30) and the outlet (22) of the collecting space (20) and/or a return line (62) is arranged between a discharge point (58), which is connected to the accumulating space (40), and the outlet (22) of the collecting space (20), the return line having a return valve (62a) in order for the return line (62) to be opened or closed selectively.

11. Beer cleaning apparatus according to one of preceding Claims 6 to 10, wherein a respective pump (72, 74), preferably an electrically driven pump, is arranged in an infeed (64) to the inlet (30a) of the overflow vessel (30) and/or in a removal line (56) for channelling away cleaned beer from the outlet (22) of the collecting space (20).

12. Beer cleaning apparatus according to one of preceding Claims 6 to 11, wherein the filter (10) has slit-like openings with a slit width of 100 to 500 µm, preferably with a slit width of 200 to 300 µm.

## Revendications

1. Procédé de nettoyage ou filtrage de bière avec les étapes de :
application de bière sur un filtre incliné (10) de sorte que la bière s'écoule le long du filtre incliné (10) et du liquide contenu dans celle-ci parvient à travers des ouvertures du filtre (10) dans un espace de collecte (20) en dessous du filtre (10) et des solides contenus dans la bière glissent vers le bas le long du filtre incliné (10), et
évacuation de la bière filtrée de l'espace de collecte (20),
**caractérisé en ce que**
la bière est mise sous pression avec du dioxyde de carbone pendant le filtrage de sorte qu'une différence de pression est générée entre un côté amont et un côté aval du filtre (10).

2. Procédé selon la revendication 1, comprenant en outre les étapes de :
ramassage des solides dans un espace de ramassage (40) en dessous du filtre (10), et
élimination périodique ou continue des solides de l'espace de ramassage (40).

3. Procédé selon une des revendications précédentes, dans lequel l'étape de l'application de la bière sur le filtre (10) présente l'étape de l'agencement d'un récipient à trop-plein (30) dans la région supérieure du filtre (10) pour laisser s'écouler sur le filtre (10) de la bière sortant du récipient à trop-plein (30).

4. Procédé selon une des revendications précédentes, en outre avec l'étape du nettoyage périodique du filtre (10) par pulvérisation de celui-ci avec un fluide de nettoyage.

5. Procédé selon une des revendications précédentes, dans lequel le filtre (10) est incliné de 10° à 80°, de préférence de 30° à 60° par rapport à l'horizontale.

6. Nettoyeur de bière avec un filtre incliné (10) et un espace de collecte (20) disposé sous le filtre (10),
un récipient à trop-plein (30) avec une entrée (30a) pour l'introduction de bière et un trop-plein (30b) pour l'application de la bière ayant débordé sur le filtre (10), et
une sortie (22) qui est connectée à l'espace de collecte (20) pour l'extraction de la bière nettoyée,
**caractérisé en ce que**
le filtre (10) et l'espace de collecte (20) sont disposés dans un réservoir de pression (50) qui est mis sous pression avec du dioxyde de carbone de sorte qu'une différence de pression règne entre un côté amont et un côté aval du filtre (10).

7. Nettoyeur de bière selon la revendication 6, présentant en outre un espace de ramassage (40) en dessous du filtre (10) pour le ramassage des solides séparés de la bière, dans lequel l'espace de ramassage (40) est de préférence connecté à un robinet-vanne (60) pour ouvrir et pour fermer l'espace de ramassage (40) pour l'élimination des solides.

8. Nettoyeur de bière selon la revendication 6 ou 7, dans lequel le filtre (10) est incliné de 10° à 80°, de préférence de 30° à 60° par rapport à l'horizontale.

9. Nettoyeur de bière selon une des revendications précédentes 6 à 8, dans lequel le réservoir de pression (50) présente en outre au moins une buse de pulvérisation (90) qui peut être raccordée à un récipient pourvu de détergent pour nettoyer l'intérieur du réservoir de pression (50) et/ou le filtre (10).

10. Nettoyeur de bière selon une des revendications précédentes 6 à 9, dans lequel une dérivation (68) avec une soupape de dérivation (68a) est disposée entre l'entrée (30a) du récipient à trop-plein (30) et la sortie (22) de l'espace de collecte (20) et/ou une conduite de retour (62) est disposée entre un déversoir (58) connecté à l'espace de ramassage (40) et la sortie (22) de l'espace de collecte (20), laquelle présente une soupape de retour (62a) pour ouvrir ou pour fermer sélectivement la conduite de retour (62).

11. Nettoyeur de bière selon une des revendications précédentes 6 à 10, dans lequel une pompe (72, 74), de préférence une pompe à entraînement électrique, est à chaque fois disposée dans une amenée (64) vers l'entrée (30a) du récipient à trop-plein (30) et/ou dans une évacuation (56) pour l'extraction de bière nettoyée de la sortie (22) de l'espace de collecte (20).

12. Nettoyeur de bière selon une des revendications précédentes 6 à 11, dans lequel le filtre (10) présente des ouvertures de type fente avec une largeur de fente de 100 à 500 µm, de préférence avec une largeur de fente de 200 à 300 µm.
